# EUROPEAN PATENT SPECIFICATION

(11) **EP 2 725 436 B1**
(45) Date of publication and mention of the grant of the patent: **05.04.2017**
(21) Application number: 13185641.1
(22) Date of filing: 24.09.2013
(51) Int. Cl.: H04L 12/40, G01S 17/02, G01S 7/00, G05B 19/00, H04L 29/08, H04L 12/403, G05B 23/02, H04W 4/00, H04J 3/16, H04L 12/413, G05B 19/042, G01S 7/481

(54) **COMMUNICATION DEVICE CONNECTABLE TO A CONTROL DEVICE AND A PLURALITY OF SENSORS**
MIT EINEM STEUERGERÄT UND MEHREREN SENSOREN ANSCHLIESSBARE KOMMUNIKATIONSVORRICHTUNG
DISPOSITIF DE COMMUNICATION CONNECTABLE À UN DISPOSITIF DE CONTRÔLE ET UNE PLURALITÉ DE CAPTEURS

(30) Priority: 23.10.2012 JP 2012233835
(43) Date of publication of application: 30.04.2014
(73) Proprietor: OMRON CORPORATION, Kyoto-shi, Kyoto 600-8530 (JP)
(72) Inventor: Ikumo, Masahiro, Kyoto-shi, Kyoto 600-8530 (JP); Yoneda, Mitsuhiro, Kyoto-shi, Kyoto 600-8530 (JP); Nosaka, Tetsuya, Kyoto-shi, Kyoto 600-8530 (JP); Kishiba, Hideyuki, Kyoto-shi, Kyoto 600-8530 (JP); Iguchi, Koji, Kyoto-shi, Kyoto 600-8530 (JP); Iida, Yusuke, Kyoto-shi, Kyoto 600-8530 (JP); Ozaki, Koyo, Kyoto-shi, Kyoto 600-8530 (JP)
(74) Representative: Horn Kleimann Waitzhofer Patentanwälte PartG mbB

(56) References cited:
- US-B2- 8 015 324

## Description

### BACKGROUND OF THE INVENTION

### TECHNICAL FIELD

The present invention relates to a communication device, particularly to a communication device that cyclically transmits data to a control device.

### RELATED ART

Generally a plurality of sensors are provided in a production line. A PLC (Programmable Logic Controller) serving as a control device controls production machines in response to signals input from various sensors. In such a production system, there is a need to centralize input systems from the sensors in order to simplify a system configuration.

In order to adapt the need, in a system disclosed in Japanese Unexamined Patent Publication No. 2011-28525, a network unit (communication unit) performs batch management to pieces of data transmitted from a plurality of sensors, and transfers the pieces of data to a control device. In the system of Japanese Unexamined Patent Publication No. 2011-28525, cyclic communication or message communication is used in communication between the communication unit and the control device. In the cyclic communication, the communication unit transmits predetermined information to the control device at a predetermined cycle. In the message communication, in response to a request (command) from the control device, the communication unit transmits the requested information to the control device.

In Japanese Unexamined Patent Publication No. 2011-28525, for example, the sensor outputs a discriminant signal (on/off value) obtained by comparison between a detection value of the sensor and a threshold. The communication unit transmits the discriminant signal to the control device using the cyclic communication.

However, there is also a user's need to acquire the detection value in addition to the discriminant signal. At the same time, when the detection value is transmitted in addition to the discriminant signal using the cyclic communication, an amount of data to be transmitted increases to possibly decrease the communication rate. A load on the communication unit also increases to possibly degrade communication performance.

Japanese Unexamined Patent Publication No. 2011-28525 discloses a configuration as a countermeasure against the problems. In the configuration, a partial monitor mode in which only the discriminant signal is transmitted using the cyclic communication and a full monitor mode in which the detection value of each sensor is transmitted using the cyclic communication in addition to the discriminant signal can be switched to each other.

However, in the case that the full monitor mode is selected, a data update cycle is lengthened, because the load on the communication unit increases while the communication rate decreases. In the case that the partial monitor mode is selected, it is necessary to separately acquire the pieces of data such as the detection value using the message communication, and therefore it is necessary for the user to separately produce a program. As a result, convenience is degraded.
In US 8015324 B2, a method is disclosed for data transmission in a serial bus system comprising a control unit and bus users. The method comprises the steps of: receiving a first data telegram by a bus user from the control unit, wherein the data telegram has a data field containing output data; reading out the data field intended for the bus user from the first data telegram; preparing input data as a response to the read out data field; checking whether a predefined criterion is met, wherein if the criterion is met a second data telegram is newly generated and the input data is attached to the second data telegram and if the criterion is not met, the input data is attached to a data telegram previously received from another bus user; and transmitting the input data to the control unit by the second data telegram.

### SUMMARY

The present invention has been devised to solve the problems described above, and an object thereof is to prevent the decrease in communication rate and the increase in load in the cyclic communication without degrading the user's convenience.

In accordance with one aspect of the present invention, a communication device is connectable to a control device and a plurality of sensors and transmits pieces of information received from the sensors to the control device. The communication device includes: a unit configured to receive a plurality of types of data from the sensors; a unit configured to store a table in which priority is fixed for each type of the data and a table in which a data transmission cycle is fixed for each priority; and a unit configured to transmit the data to the control device at cycles in accordance with the priority fixed for the respective types of the data, data of higher priority being transmitted with a shorter cycle than data of lower priority. The communication device may be physically and electrically connected to the control device and the sensors.

The data transmitted to the control device from the sensor through the communication device includes, for example, a discriminant signal (on/off value) obtained by comparison between a detection value of the sensor and a threshold, error information, a bottom value of the detection value, a peak value of the detection value, warning information obtained by comparison between the bottom value or the peak value and the threshold, the detection value of the sensor, and setting values such as the threshold set in the sensor. The setting values include a threshold used in the comparison to the detection value and a threshold used in abnormality determination. For example, the peak value is a maximum value of the detection value in a predetermined cycle. An average value of the maximum values may be used as the peak value. For example, the bottom value is a minimum value of the detection value in a predetermined cycle. An average value of the minimum values may be used as the bottom value.

The lower priority is given to data that does not need to be frequently transmitted, and the transmission cycle is lengthened, so that a total data amount can be reduced in transmitting data that needs to be frequently transmitted. Therefore, the decrease in communication rate and the increase in load in the cyclic communication can be prevented. Although the transmission cycle is lengthened, the data having the lower priority is also transmitted using the cyclic communication. Therefore, it is not necessary for the user to separately produce a program used in the message communication by which the data having the lower priority is acquired. Although it is necessary to set the priority of the data, a burden of the setting is lighter than a burden of producing the program. Therefore, the user's convenience is not degraded.

The priority of one or more types of the data may be changed in response to a request from the control device. Therefore, the user can arbitrarily set the transmission cycle of each piece of data according to a user's usage mode.

The communication device may conduct communication with the control device following EtherCAT protocol. Accordingly, when the communication device is powered on, the state of the communication device sequentially makes a transition to an initialization state, a pre-operational state, a safe operational state, and an operational state. The priority of one or more types of the data may be changed in the pre-operational state. Because a message communication function (SDO (Service Data Object) communication) is available in the pre-operational state, the priority can be changed using the message communication. The priority is set before the communication device makes the transition to the operational state or the operational state, in which a cyclic communication function (PDO (process data objects) communication) is available, the cyclic communication can therefore be started quickly according to the fixed priority after the communication device makes the transition to the safe operation state or the operational state.

The lower priority is given to the data that does not need to be frequently transmitted, and the transmission cycle is lengthened, so that the total data amount can be reduced in transmitting the data that needs to be frequently transmitted. Therefore, the decrease in communication rate and the increase in load in the cyclic communication can be prevented. Although the transmission cycle is lengthened, the data having the lower priority is also transmitted using the cyclic communication. Therefore, it is not necessary for the user to separately produce the program used in the message communication by which the data having the lower priority is acquired. Although it is necessary to set the priority of the data, the burden of the setting is lighter than the burden of producing the program. Therefore, the user's convenience is not degraded.

### BRIEF DESCRIPTION OF THE DRAWINGS

Fig. 1 is a schematic diagram of a photoelectric sensor system;
Fig. 2 is a perspective view illustrating an exterior of a communication unit;
Fig. 3 is a functional block diagram of the communication unit;
Fig. 4 is a perspective view illustrating an exterior of a distribution unit;
Fig. 5 is a functional block diagram of the distribution unit;
Fig. 6 is a perspective view of a sensor;
Fig. 7 illustrates a priority setting table in which priority is fixed for each type of data;
Fig. 8 illustrates a cycle setting table in which a data transmission cycle is fixed for each priority;
Fig. 9 is a diagram illustrating data transmitted to a PLC from the communication unit; and
Fig. 10 is a diagram illustrating a transition of a state defined by EtherCAT protocol.

### DETAILED DESCRIPTION

Hereinafter, an embodiment of the present invention will be described below with reference to the drawings. In the following description, identical components are designated by identical numerals. The names and the functions of the identical components are identical to each other. Accordingly, their detailed description is not repeated.

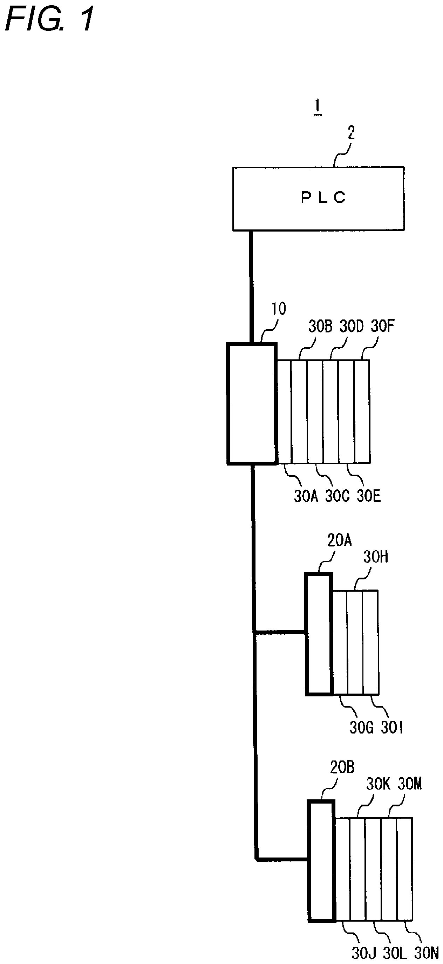

A photoelectric sensor system 1 that is an example of a sensor system will be described below with reference to Fig. 1. A sensor system other than a photoelectric sensor system may be used as well. The photoelectric sensor system 1 includes a communication unit 10, a plurality of distribution units 20 (20A and 20B), and a plurality of sensors 30 (30A to 30N).

The communication unit 10 (which is an example of a communication device) is physically and electrically connected to a PLC 2 and the plurality of sensors 30 in the following manner, and transmits pieces of information received from the plurality of sensors 30 to the PLC 2.

The communication unit 10 is connected to the PLC 2 through a network such as a LAN (Local Area Network). In the embodiment, the communication unit 10 is configured to conduct communication with the PLC 2 following EtherCAT (registered trademark) protocol. CC-LINK (registered trademark), DeviceNET, and CompoNET may be used instead of EtherCAT (registered trademark) protocol.

The distribution units 20A and 20B are connected to the communication unit 10 in a bus form. Although the two distribution units 20A and 20B are used in the embodiment, there is no limitation to the number of distribution units.

In the embodiment, each of the distribution units 20A and 20B is physically connected to the communication unit 10 through a serial transmission line. Each of the distribution units 20A and 20B may be connected to the communication unit 10 through a parallel transmission line.

The communication unit 10 and the distribution units 20A and 20B are connected to different sensors 30. That is, the sensors 30A to 30N are placed in the photoelectric sensor system 1 in a distributed manner. For example, in the embodiment, the sensors 30A to 30F are connected to the communication unit 10. The sensors 30G to 30I are connected to the distribution unit 20A. The sensors 30J to 30N are connected to the distribution unit 20B. Note that the total number of sensors 30 and the numbers of sensors 30 connected to each of the communication unit 10 and the distribution unit 20 are not limited to the numbers in Fig. 1. For example, no sensor needs to be connected to the communication unit 10.

In the embodiment, the communication unit 10 transmits signals from the sensors 30A to 30F to the PLC 2. The distribution unit 20A transmits the signals from the sensors 30G to 30I to the communication unit 10, and the communication unit 10 transmits the signals from the distribution unit 20A to the PLC 2. The distribution unit 20B transmits the signals from the sensors 30J to 30N to the communication unit 10, and the communication unit 10 transmits the signals from the distribution unit 20B to the PLC 2. Accordingly, the signals from the sensors 30A to 30N are transmitted to the PLC 2 while centralized by the communication unit 10.

For example, a discriminant signal (on/off value) obtained by comparison between a detection value of each sensor 30 and a threshold, error information, a bottom value of the detection value, a peak value of the detection value, warning information obtained by comparison between the bottom value or the peak value and the threshold, the detection value of each sensor 30, and a setting value, such as the threshold, which is set in each sensor, are directly transmitted to the communication unit 10 from each sensor 30 or indirectly to the communication unit 10 through the distribution unit 20 at a predetermined cycle. In the embodiment, for example, the detection value of the sensor 30 is a light receiving amount. For example, the setting value is the threshold compared to the light receiving amount, the peak value, or the bottom value. The information transmitted to the communication unit 10 from each sensor 30 is not limited to the light receiving amount, the peak value, or the bottom value. Additionally, the communication unit 10 may notify the PLC 2 of the number of sensors 30 in the photoelectric sensor system 1 and a state (an initialization state, a pre-operational state, a safe operational state, and an operational state) of the communication unit 10.

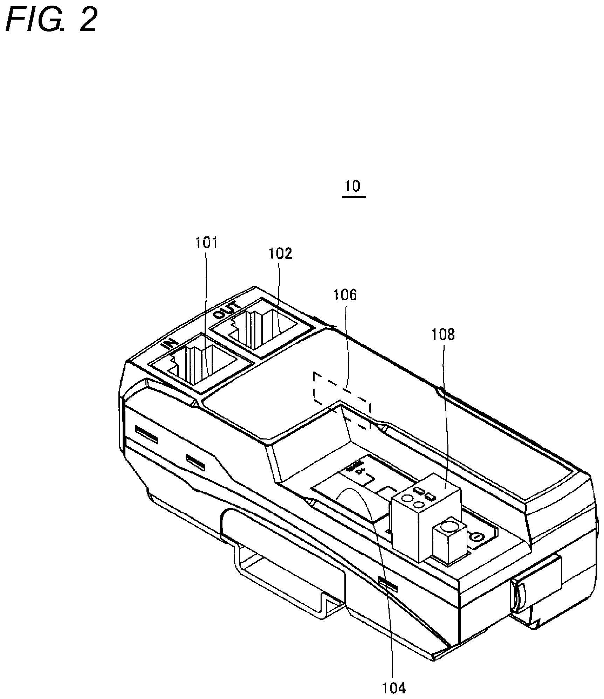

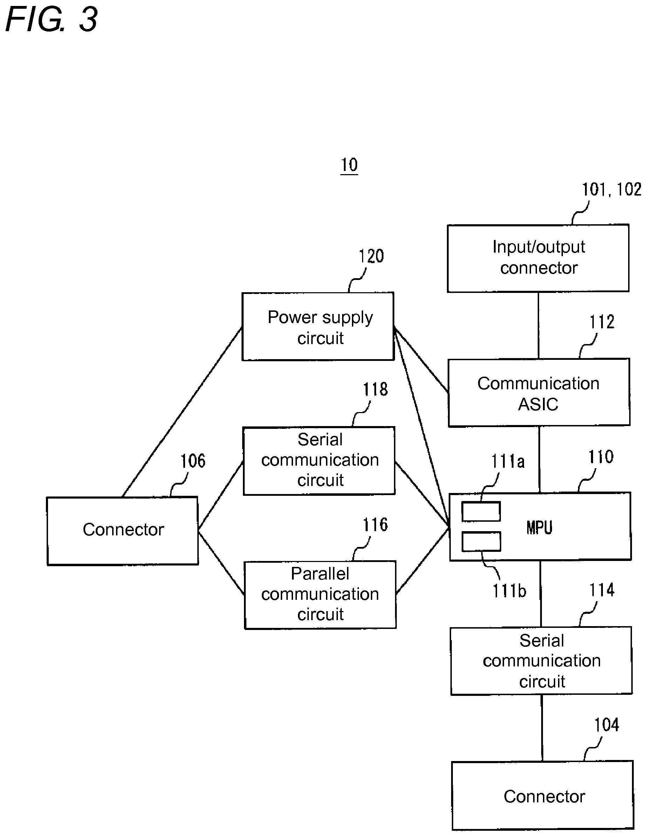

The communication unit 10 will further be described with reference to Figs. 2 and 3. As illustrated in Fig. 2, the communication unit 10 includes an input connector 101 and an output connector 102 which are used for the connection to the PLC 2, a connector 104 used for the connection to the distribution units 20, a connector 106 used for the connection to the sensors 30, and a power input connector 108.

As illustrated in Fig. 3, the communication unit 10 includes an MPU (Micro Processing Unit) 110, a communication ASIC (Application Specific Integrated Circuit) 112, a serial communication circuit 114, a parallel communication circuit 116, a serial communication circuit 118, and a power supply circuit 120.

The MPU 110 operates so as to totally perform all pieces of processing in the communication unit 10. The communication ASIC 112 manages the communication with the PLC 2. As described above, the communication unit 10 conducts communication with the PLC 2 following EtherCAT protocol. The communication unit 10 transmits data, which is requested by the PLC 2, to the PLC 2 using the message communication, and the communication unit 10 cyclically transmits data to the PLC 2 using the cyclic communication. For example, the data received from the sensors 30 and the data generated by the communication unit 10 are temporarily stored in a memory 111 a of the MPU 110, and the pieces of data stored in the memory 111 a are transmitted using the cyclic communication. That is, a transmission cycle of the cyclic communication is fixed as a cycle at which the pieces of data are read from the memory 111 a. The transmission cycle of the cyclic communication is fixed (i.e. set) according to a table stored in a memory 111 b and a priority fixed for each type of the data. The data transmission cycle is described in detail later.

The serial communication circuit 114 is used in the serial communication between the communication unit 10 and the distribution unit 20. The parallel communication may be used. For example, a transmission communication line and a reception communication line are used to connect the communication unit 10 and the distribution unit 20.

The parallel communication circuit 116 is used in the parallel communication between the communication unit 10 and the sensor 30, and the serial communication circuit 118 is used in the serial communication between the communication unit 10 and the sensors 30. That is, the communication unit 10 and the sensors 30 are physically connected to each other through the serial transmission line and the parallel transmission line. Alternatively, the communication unit 10 and the sensors 30 may be connected to each other through one of the serial transmission line and the parallel transmission line. Accordingly, the serial communication circuit 114, the parallel communication circuit 116 and the serial communication circuit 118 each correspond to a "unit configured to receive a plurality of types of data from the sensors."

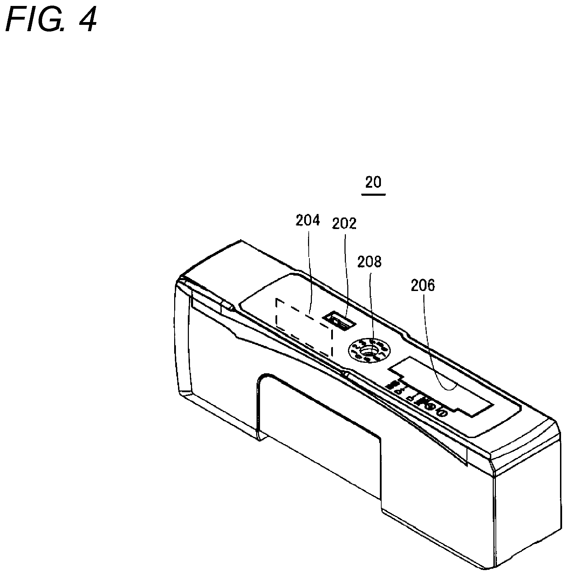

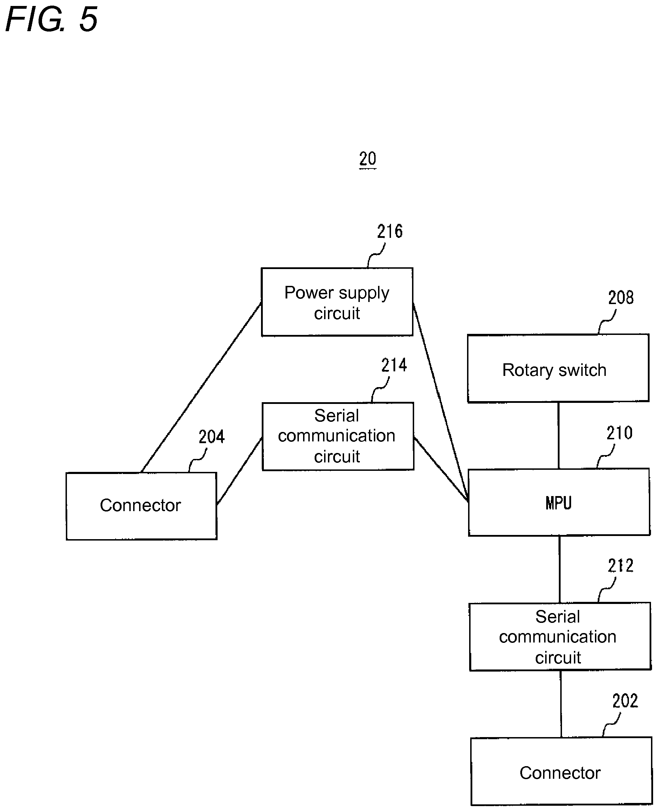

The distribution unit 20 will further be described with reference to Figs. 4 and 5. As illustrated in Fig. 4, the distribution unit 20 includes a connector 202 used for the connection to the communication unit 10, a connector 204 used for the connection to the sensor 30, a power input connector 206, and a rotary switch 208.

As illustrated in Fig. 5, the distribution unit 20 includes an MPU 210, a serial communication circuit 212 that conducts communication with the communication unit 10, a serial communication circuit 214 that conducts communication with the sensor 30, and a power supply circuit 216.

The MPU 210 operates so as to totally perform all pieces of processing in the distribution unit 20. As described above, the communication unit 10 and the distribution unit 20 are connected to each other in the bus form, and the serial communication is used.

For example, one of the sensors 30 is attached to a side surface of the distribution unit 20. Although the serial communication is used in the communication between the distribution unit 20 and the sensors 30, the parallel communication may be used. On the other hand, the distribution units 20 and the sensors 30 are physically connected to each other through one of the serial transmission line and the parallel transmission line. Alternatively, the distribution units 20 and the sensors 30 may be connected to each other through the serial transmission line and the parallel transmission line.

In the embodiment, because a plurality of distribution units 20 are provided in the photoelectric sensor system 1, it is necessary to identify an identification number of each distribution unit 20 in order that the communication unit 10 conducts communication with the distribution units 20 while discriminating the distribution units 20 from each other. A user can use the rotary switch 208 to set the identification number to each distribution unit 20. The communication unit 10 can identify the distribution unit 20 of a data transmission source from the identification number included in the received data. The identification number is included in the data transmitted from the communication unit 10, which allows a command to be issued to the desired distribution unit 20.

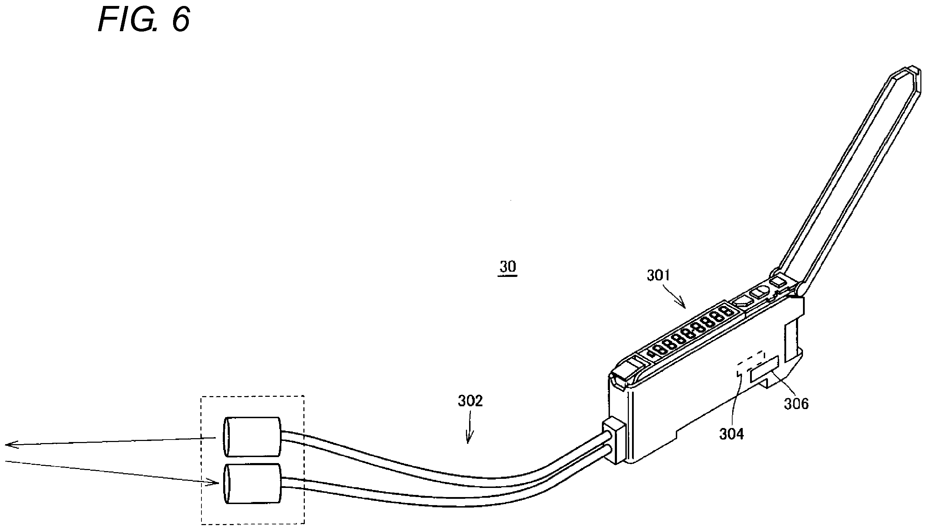

A representative sensor 30 will further be described with reference to Fig. 6. The sensor 30 includes an amplifier unit 301 and a fiber unit 302. The amplifier unit 301 includes a cover that is turnably attached to a casing and a frame that is accommodated in the casing. The amplifier unit 301 includes a display unit and an operation unit in an upper surface of the frame that is exposed in an opened state of the cover. The user can set the setting values such as the threshold by operating the operation unit. In the sensor 30, the setting values can automatically be set in response to the command from the PLC 2.

Connectors 304 and 306 used for the connection to the communication unit 10, the distribution unit 20, or another amplifier unit 301 are provided in both sidewall portions of the amplifier unit 301. Accordingly, the plurality of amplifier units 301 can be connected in series with respect to the communication unit 10 or the distribution unit 20. The signal from the amplifier unit 301 connected to another amplifier unit 301 is transmitted to the communication unit 10 or the distribution unit 20 through the other amplifier unit 301.

The fiber unit 302 is connected to a front wall portion of the amplifier unit 301. The fiber unit 302 includes a head unit, a light-projecting-side optical fiber, and a light-receiving-side optical fiber.

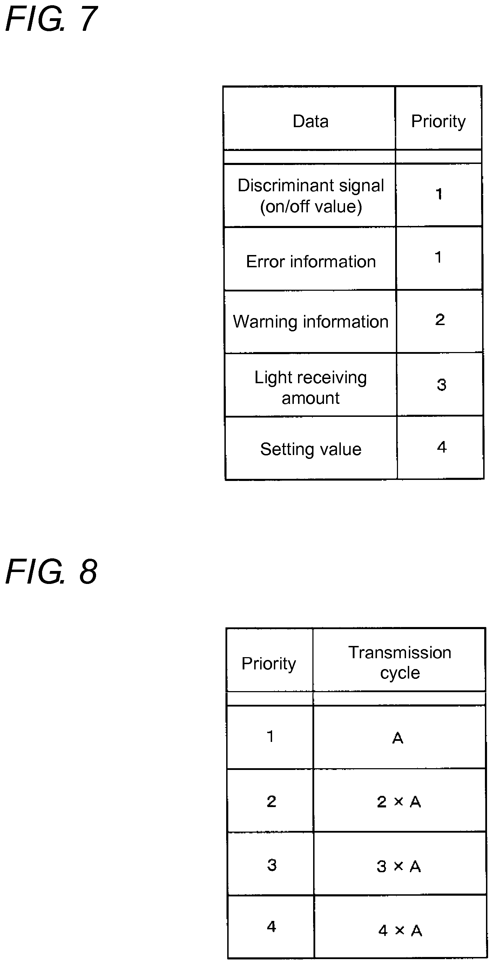

The data transmitted to the PLC 2 from the communication unit 10 will be described below. The priority is allocated to the data for each type of the data. The communication unit 10 stores a priority setting table illustrated in Fig. 7 in the memory 111 b of the MPU 110, and manages the priority of each piece of data using the priority setting table. Accordingly, the memory 111 b corresponds to "a unit configured to store a table in which a priority is fixed for each type of the data and a table in which a data transmission cycle is fixed for each priority." In the embodiment, the priority increases with decreasing numerical value corresponding to the priority. That is, "1" is the highest priority, and the priority decreases with increasing numerical value. A priority expressing method is not limited to the embodiment, but the priority may be expressed using characters such as an alphabetic character. The priority is allocated by a developer or the user, and registered in the priority setting table stored in the communication unit 10 using a computer.

The data transmission cycle is fixed according to the priority. The communication unit 10 stores a cycle setting table illustrated in Fig. 8 in the memory 111 b of the MPU 110, and manages the transmission cycle of each priority using the cycle setting table. In the embodiment, the shorter cycle is fixed as the priority increases. As illustrated in Fig. 8, the data having the priority of "1" is transmitted at a predetermined cycle A. For example, the cycle A is equal to a cycle at which the data is transmitted using the cyclic communication. The data having the priority of "2" is transmitted in a cycle double the cycle A at which the data having the priority of "1" is transmitted. The data having the priority of "3" is transmitted in a cycle three times the cycle A at which the data having the priority of "1" is transmitted. The data having the priority of "4" is transmitted in a cycle four times the cycle A at which the data having the priority of "1" is transmitted. However, the cycles are not limited to those of the embodiment. The priority is allocated by the developer or the user, and registered in the priority setting table stored in the communication unit 10 using the computer.

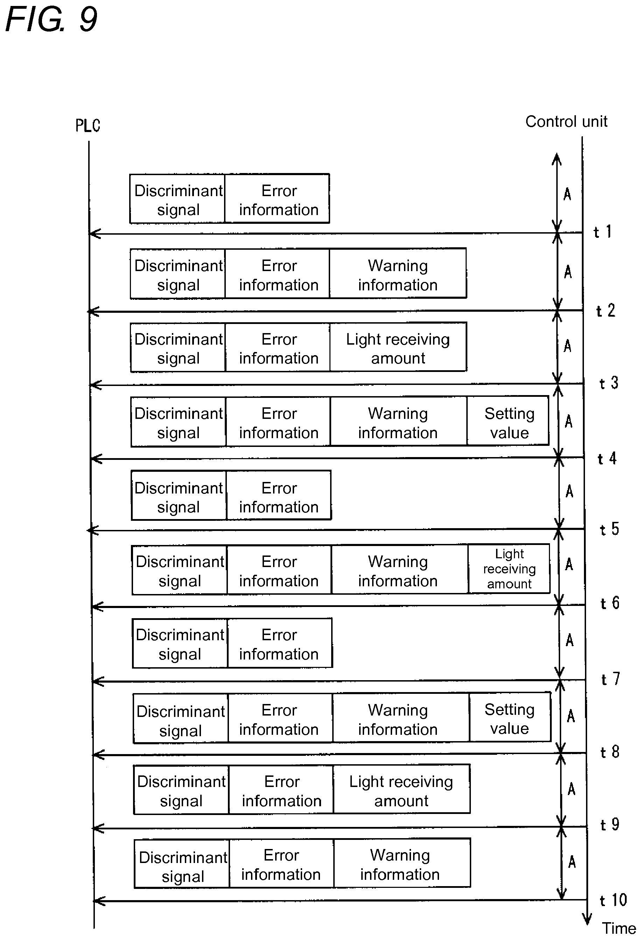

As a result of setting the cycle of each piece of data, at a time t1 in Fig. 9, the discriminant signal and the error information are transmitted to the PLC 2 from the communication unit 10. The discriminant signal, the error information, and the warning information are transmitted at a time t2. The discriminant signal, the error information, and the light receiving amount are transmitted at a time t3. The discriminant signal, the error information, the warning information, and the setting value are transmitted at a time t4. The discriminant signal and the error information are transmitted at a time t5. The discriminant signal, the error information, the warning information, and the light receiving amount are transmitted at a time t6. The discriminant signal and the error information are transmitted at a time t7. The discriminant signal, the error information, the warning information, and the setting value are transmitted at a time t8. The discriminant signal, the error information, and the light receiving amount are transmitted at a time t9. The discriminant signal, the error information, and the warning information are transmitted at a time t10.

The priority of each type of the data, namely, the transmission cycle can be changed in response to the request transmitted to the communication unit 10 from the PLC 2 using the message communication. Specifically, the user operates an operation terminal (such as a computer and a display device) to transmit the request to the PLC 2, thereby changing the priority.

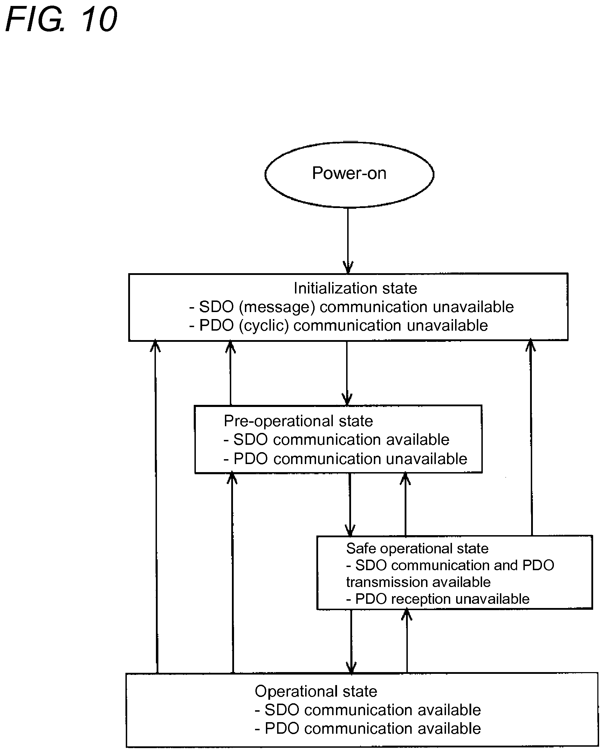

At this point, as illustrated in Fig. 10, when the communication unit 10 is powered on, the state of the device having a communication function in which EtherCAT protocol is used sequentially makes a transition to the initialization state, the pre-operational state, the safe operational state, and the operational state. In the initialization state, neither the message communication (SDO communication) nor the cyclic communication (PDO communication) is available. In the pre-operational state, the message communication is available while the cyclic communication is unavailable. In the safe operational state, the data can be transmitted using the message communication or the cyclic communication while the data cannot be received using the cyclic communication. In the operational state, both the message communication and the cyclic communication are available.

In the embodiment, in consideration of the communication format available in each state, the priority of one or more types of the data may be changed using the message communication in the pre-operational state. That is, the communication unit 10 may change the priority in the priority setting table based on the command, which is transmitted using the message communication.

It is noted that the disclosed embodiment is illustrated only by way of example but not restrictive in all respects. The scope of the present invention is indicated by not the description but the claims, and all the changes within the meanings and ranges equivalent to the claims are also to be included in the present invention.

## Claims

1. A communication device (10) that is connectable to a control device (2) and a plurality of sensors (30) to transmit pieces of information received from the sensors (30) to the control device (2), the communication device (10) comprising:
a unit (114, 116, 118) configured to receive a plurality of types of data from the sensors (30);
a unit (111 b) configured to store a table in which a priority is fixed for each type of the data and a table in which a data transmission cycle is fixed for each priority; and
a unit (112) configured to transmit the data to the control device (2) at cycles in accordance with the priorities fixed for the respective types of the data, data of higher priority being transmitted with a shorter cycle than data of lower priority.

2. The communication device (10) according to claim 1, further comprising a changing unit configured to change the priority of one or more types of the data in response to a request from the control device (2).

3. The communication device (10) according to claim 2, wherein
the communication device (10) conducts communication with the control device (29) following EtherCAT protocol, and
the changing unit changes the priority of one or more types of the data in a pre-operational state.

## Patentansprüche

1. Kommunikationsvorrichtung (10), die mit einer Steuervorrichtung (2) und mehreren Sensoren (30) verbindbar ist, um von den Sensoren (30) empfangene Informationen an die Steuervorrichtung (2) zu übermitteln, wobei die Kommunikationsvorrichtung (10) Folgendes aufweist:
eine Einheit (114, 116, 118), die eingerichtet ist, mehrere Arten von Daten von den Sensoren (30) zu empfangen;
eine Einheit (111 b), die eingerichtet ist, eine Tabelle, in welcher eine Priorität für jede Art der Daten festgelegt ist, sowie eine Tabelle, in welcher ein Datenübermittlungszyklus für jede Priorität festgelegt ist, zu speichern; und
eine Einheit (112), die eingerichtet ist, die Daten an die Steuervorrichtung (2) in Zyklen zu übermitteln, die mit den Prioritäten übereinstimmen, die für die jeweiligen Arten von Daten festgelegt sind, wobei Daten mit höherer Priorität mit kürzeren Zyklen übermittelt werden als Daten mit geringerer Priorität.

2. Kommunikationsvorrichtung (10) gemäß Anspruch 1, ferner aufweisend eine Änderungseinheit, die eingerichtet ist, die Priorität von einer oder mehreren Arten von Daten in Antwort auf eine Anfrage von der Steuervorrichtung (2) zu ändern.

3. Kommunikationsvorrichtung (10) gemäß Anspruch 2, wobei
die Kommunikationsvorrichtung (10) mit der Steuervorrichtung (29) gemäß dem EtherCAT-Protokoll kommuniziert, und
die Änderungseinheit die Priorität von einer oder mehreren Arten von Daten in einem prä-operationellem Zustand ändert.

## Revendications

1. Dispositif de communication (10) pouvant être connecté à un dispositif de commande (2) et à une pluralité de capteurs (30) pour transmettre des informations reçues en provenance des capteurs (30), au dispositif de commande (2), le dispositif de communication (10) comprenant :
une unité (114, 116, 118) conçue pour recevoir une pluralité de types de données en provenance des capteurs (30) ;
une unité (11b) conçue pour stocker une table dans laquelle une priorité est fixée pour chaque type des données et une table dans laquelle un cycle de transmission de données est fixé pour chaque priorité ; et
une unité (112) conçue pour transmettre les données au dispositif de commande (2) à des cycles en conformité avec les priorités fixées pour les types respectifs des données, des données de priorité supérieure étant transmises selon un cycle plus court que des données de priorité inférieure.

2. Dispositif de communication (10) selon la revendication 1, comprenant en outre une unité de modification conçue pour modifier la priorité d'un ou de plusieurs type(s) des données, en réponse à une demande provenant du dispositif de commande (2).

3. Dispositif de communication (10) selon la revendication 2, dans lequel :
le dispositif de communication (10) conduit une communication avec le dispositif de commande (29) suivant le protocole EtherCAT, et
l'unité de modification modifie la priorité d'un ou de plusieurs type(s) des données, à l'état pré-opérationnel.
